# EUROPEAN PATENT SPECIFICATION

(11) **EP 4 334 626 B1**
(45) Date of publication and mention of the grant of the patent: **18.11.2026**
(21) Application number: 22729750.4
(22) Date of filing: 04.05.2022
(51) Int. Cl.: F16L 53/34, F16L 53/37, F16L 53/38, F16L 59/14, H05B 3/00

(54) **ELECTRICALLY HEATED SUBSEA PIPELINES AND METHOD**
ELEKTRISCH BEHEIZTE UNTERWASSERROHRLEITUNGEN UND VERFAHREN
PIPELINES SOUS-MARINS CHAUFFÉS ÉLECTRIQUEMENT ET PROCÉDÉ

(30) Priority: 04.05.2021 GB 202106341
(43) Date of publication of application: 13.03.2024
(73) Proprietor: Subsea 7 Limited, Sutton, Surrey SM2 5BN (GB)
(72) Inventor: MANACH, Julien, Aberdeen AB13 0DS (GB); VERDEIL, Julien, 92150 Suresnes (FR); SATHANANTHAN, Ratnam, Aberdeen AB32 6NL (GB)
(74) Representative: Keltie LLP
(86) International application number: PCT/GB2022/051138
(87) International publication number: WO 2022/234277

(56) References cited:
- WO-A1-2013/124270
- WO-A2-2013/113430
- GB-A- 2 548 096

## Description

This invention relates to the heating of subsea pipelines that are used in the production of hydrocarbon fluid. The objective of heating is to avoid a pipeline becoming clogged or plugged with solids that may otherwise appear in the fluid if its temperature falls too low within a given pressure range. The invention is particularly concerned with the problem of reducing the electrical power that is required to heat a subsea pipeline for flow assurance.

Oil and gas are present in subterranean formations at elevated temperature and pressure, which may be increased by the injection of fluids such as pressurised water or steam. On production of oil or gas from subsea fields, the hot production fluid emerges from a subsea wellhead and enters a subsea pipeline in a multiphase state. The production fluid then flows in the pipeline across the seabed and eventually flows up a riser to the surface.

Low temperature increases the viscosity of the production fluid and promotes coalescence or precipitation of solid-phase materials from some components present in the fluid, namely waxes and asphaltenes in crude oil and hydrates in natural gas, which may also be present with oil. Such solid-phase materials tend to deposit and accumulate on the inner wall of the pipeline and may eventually cause plugs, which will interrupt production. Aside from the high cost of lost production, plugs are difficult and expensive to remove and can even sever a pipeline.

During transportation along a pipeline, the temperature and pressure of the production fluid have to be kept high enough to ensure a sufficient flow rate across the seabed and up a riser. In particular, various measures are taken to ensure that the internal temperature of the pipeline remains high despite thermal exchange with the surrounding seawater, which is invariably much colder.

Maintaining a sufficient temperature in a flow of hydrocarbons is straightforward while the hot flow continues but it becomes critical during a shutdown period. In this respect, all or part of a subsea oil or gas field must occasionally be shut down for maintenance. Shutdown may also occur on an unplanned basis in the event of an equipment failure or other anomaly. During shutdown, production is stopped and therefore hot production fluid no longer flows through the pipeline.

If the flow of production fluid stops for any reason, the temperature of the fluid left within the pipeline will decrease due to thermal exchange with the surrounding water. Plugging becomes a risk if the temperature of the production fluid within the pipeline drops below the wax appearance temperature (WAT), or below other thresholds at which other solid materials will coalesce from oil or gas, notably the hydrate appearance temperature (HAT). Also, when production restarts, temperature within the pipeline must be increased quickly so that no plugs will form.

Designers of subsea pipelines have adopted both passive and active approaches to thermal management, both individually and in combination. Passive thermal management involves retaining heat in the production fluid whereas active thermal management involves adding heat to the production fluid to replace heat that is inevitably lost to the surrounding water. In principle, heating can be used for remediation after the appearance of wax or hydrates but the main objective is to keep the production fluid above the WAT and HAT.

In passive thermal management systems, a pipeline is thermally insulated. One example of a passive system is a pipe-in-pipe (PiP) structure comprising a fluid-carrying inner pipe positioned concentrically within an outer pipe. The inner and outer pipes are spaced from each other to define an insulating annulus between them. Typically, thermally-insulating material is disposed in the annulus; it is also possible to draw down a partial vacuum in the annulus to reduce transmission of heat through the annulus.

Among active thermal management systems, a trace heating system employs resistive electrical wires or cables running along, and in thermal contact with, the outer surface of a steel pipeline. Typically, triplets of cables define respective three-phase heating circuits, for example up to twelve circuits hence comprising a total of thirty-six cables distributed around the pipeline. Heat produced by the Joule effect upon passing an electric current along the cables is conducted through the pipe wall to the production fluid flowing within. Alternatively, the cables may heat the adjacent pipe wall by induction. For example, in skin-effect heating, an inductive ferromagnetic tube containing a cable is laid along the pipeline.

Conventionally, heating cables of electrically heated subsea pipelines are disposed within the annulus of a PiP structure against the outer surface of the inner flowline pipe, buried beneath a surrounding layer of thermal insulation material in the annulus.

Direct electrical heating (DEH) of steel pipelines is also common. A DEH system is so called because the steel flowline wall is heated directly by a current that flows through it. For this purpose, a power cable is connected to a flowline pipe and may conveniently be installed in piggyback relation to the pipe. Single-phase alternating current flows along the cable and back through the pipe wall, which serves as an electrically-conductive impedance. The alternating current heats the wall of the pipe by a combination of Joule and skin effects, which in turn heats the production fluid. The temperature of the production fluid can therefore be controlled by varying that current.

A power distribution switchboard for an electrical heating system may be located subsea on the seabed or topside on a host installation at the surface, typically on an offshore installation such as a platform or an FPSO (floating production, storage and offloading) vessel. Ultimately, though, all electrical heating systems for subsea pipelines require a power supply from the topside host installation.

Power production and transformation require dedicated, bulky topside equipment where space is often at a premium. Power transmission also requires an expensive umbilical extending between the surface and the seabed, with a large cross-section and a complex structure that may include multiple slip rings. Energy consumption and emissions involved with power generation are also a consideration.

An objective of the invention is to minimise the power requirement of a pipeline heating system, in which case all of the above drawbacks can be mitigated. In particular, the topside equipment and the umbilical can be made smaller, simpler and less expensive, for example by reducing the cross-section of, and the number of slip rings in, the umbilical. These benefits can be particularly important when exploiting brownfield developments where production is plateauing or declining, and where cost-effective solutions are therefore necessary to extend the life of the field.

The prior art includes DEH systems in which multiple sections of pipeline are powered independently. For example, WO 2010/079318 discloses a daisy-chain arrangement of successive DEH sections and in WO 2013/113430, the phases of multiple DEH units powered from the same topside installation are synchronised by a load-balancing technique known as 'symmetration'.

In WO 2013/188012, temperature sensors are arranged on distinct sections of DEH pipeline. Whilst heating of sections is regulated by virtue of temperature measurements, the power supply and transmission equipment has to be capable of powering all of the sections simultaneously. Similarly, self-regulating trace heating, where a temperature sensor is used to adapt the heating power to achieve a desired outcome, is also known in the art.

GB 2548096 discloses a 'cold flow' system and method in which fluid in a pipeline is actively cooled to the temperature of the surrounding seawater in order to encourage the formation of solid deposits that are washed along with flow of fluid in the pipeline. In order to prevent build-up of deposits on the walls of the pipeline, the walls are periodically heated to release deposits that are attached to the walls.

WO 2013/124270 also relates to direct electrical heating of subsea pipelines carrying fluid hydrocarbons.

None of this prior art addresses the problem solved by the invention. Consequently, the prior art does not enable a radical reduction in the power requirement of a subsea heating system and a corresponding reduction in the size, complexity and cost of the topside equipment and the umbilical.

Against this background, the invention resides in a method of operating an electric heating system having at least first and second sections disposed in neighbouring longitudinal succession along a subsea pipeline. The method comprises, in a repeating cycle: for a first period of time, supplying greater heating power to the first section than to the second section; and then decreasing the level of heating power supplied to the first section while increasing the level of heating power supplied to the second section in a transition after the first period of time; and then, for a second period of time, supplying greater heating power to the second section than to the first section, and then decreasing the level of heating power supplied to the second section while increasing the level of heating power supplied to the first section in a transition after the second period of time, so that the levels of heating power supplied to the first and second sections are in mutually-opposed alternation throughout the cycle. Aggregate power supplied to the system may therefore be maintained at a substantially constant level throughout the cycle.

The second section may be deactivated for the first period and the first section may be deactivated for the second period. Alternatively, heating power may continue to be supplied to the second section for the first period and to the first section for the second period.

Where the temperature of fluid within or flowing from the pipeline is measured, the timing of the cycle or the levels of heating power supplied to the first and second sections may be adjusted in response to the measured temperature.

More generally, varying levels of heating power may be supplied to the first and second sections throughout the cycle. Alternatively, the level of heating power supplied to the first section may be substantially constant throughout the first period. Similarly, the level of heating power supplied to the second section may be substantially constant throughout the second period. However, a greater maximum level of heating power may be supplied to the first section than to the second section.

The inventive concept also embraces a corresponding electric heating system for a subsea pipeline, the system comprising: at least first and second heating sections that are disposed in neighbouring longitudinal succession along the pipeline;a switchboard; and a controller that is configured to supply power to the first and second sections in a repeating cycle, in which cycle a greater level of heating power is supplied to the first section than to the second section for a first period of time; and then the level of heating power supplied to the first section is decreased while the level of heating power supplied to the second section is increased in a transition after the first period of time; and then a greater level of heating power is supplied to the second section than to the first section for a second period of time; and then the level of heating power supplied to the second section is decreased while the level of heating power supplied to the first section is increased in a transition after the second period of time, so that the levels of heating power supplied to the first and second sections are in mutually-opposed alternation throughout the cycle. The switchboard may be located on a surface installation or at a subsea location and may be configured to operate the cycle autonomously.

The inventive concept extends to a subsea pipeline that includes at least one heating system of the invention. At least one temperature sensor may be mounted on or positioned downstream of the pipeline and may be connected to the switchboard to send production fluid temperature feedback to the switchboard. The switchboard may be configured to respond to that feedback by adjusting the timing of the cycle and/or by adjusting the levels of heating power supplied to the first and second sections.

The inventive concept also covers an offshore hydrocarbon production installation comprising at least one pipeline of the invention. In such an installation, the heating system may be powered via an umbilical that extends from a power unit at the surface and connects to the heating system. Such an umbilical may conveniently connect to the heating system between the first and second sections.

In summary, the invention contemplates intermittent heating of sections of a subsea flowline to limit power consumption and to reduce the size of the associated electrical distribution system. Reduction of the power requirement for the flowline heating system beneficially reduces the size of the electrical distribution system, including the cross-section of a subsea umbilical. This improves the prior art approach of using a high-power distribution system including a large, complex and correspondingly expensive umbilical.

The invention provides a method of operation of electrical heating systems for subsea flowlines, based on intermittent heating, that optimises the design and power consumption of such systems. This intermittent heating method is implemented in a heating system that is divided into two or more sections along the flowline. Dividing an active heating system into sections is known, but the standard method of operating such heating systems involves activating all of the sections at the same time.

In particular, with a heated pipeline comprising first and second sections of trace-heated flowline, the prior art teaches supplying the same level of power to a given number of cables or triplets in a first section and to the same number of cables or triplets in a second section at the same time. With the new concept of the invention, each section may be heated alternately for a defined duration and to a defined heating power. So, in contrast to the prior art, the method of the invention proposes to alternate power levels between the sections.

Thus, in accordance with the invention, power may be supplied to a given number of cables or triplets in the first section, which may be the same number of conductors as in the prior art mode described previously, for a period of time. Then, the power supply to that first section may be switched off, and power may instead be supplied to the second section for a period of time and so on. This principle can be applied to as many sections as is relevant for the project development and so is not limited to two sections.

The principle of the invention exploits the thermal inertia of the production fluid and of the pipe itself and will work with any production fluid comprising gas, oil and/or water. In theory, the overall power requirement with this method of operation can be approximately half that of a conventional method. In practice, however, overall power input can be set at any level that may be necessary to provide a required degree of flow assurance while also achieving a worthwhile saving in the overall power requirement.

The design of the power distribution system is based on the maximum heating power required, allowing for defined spares and redundancy. As the invention allows the design of the power supply to be based on a much lower power requirement, the result is a major saving in the hardware cost. The biggest cost saving may arise from a reduction of the cross-section of the power umbilical. These cost savings introduce major benefits especially for, but not limited to, reducing the topside space requirement, and the number of slip rings.

The invention can be used in three main modes of operation as follows. For each mode, the number of active triplets or cables or the power supplied to a DEH cable is defined by the flow assurance requirement.

In a maintenance mode, a DEH cable or a number of triplets or cables are active to keep the temperature of the production fluid above the HAT during a production interruption.

In a heat-up mode, the DEH cable or a number of triplets or cables are active to warm up the product after a long flow interruption which led the production fluid temperature to go below the HAT, close to the ambient temperature of the surrounding environment.

In a continuous heating mode, the DEH cable or a number of triplets or cables is active to maintain a required temperature in the production fluid and to keep a desired flow rate for a defined period of time. The target temperature is based on both the WAT and the HAT, whichever is higher.

Embodiments of the invention implement a method to heat at least two successive sections of electrically heated pipeline, the method comprising alternately heating each section in turn for a time duration while power supply is reduced or nullified in another of the sections.

Electrical heating may be effected by any one of, or any combination of, trace heating, direct electrical heating (DEH) or induction heating.

The power cables of two successive sections may be connected by a switchboard, which may be located subsea. In that case, the switchboard may be controlled remotely from the surface. The switchboard may instead be pre-programmed to operate automatically or autonomously.

The time duration of heating may be determined by measuring and responding to temperature in the corresponding pipeline section. The time duration may instead be predetermined for reaching a target temperature, based on the thermal performance or U-value of the pipeline.

Embodiments of the invention also provide an electrically trace heated pipeline comprising: at least two separate sections of trace heating cables along the surface of the pipeline; and a switchboard connecting and controlling the sections of trace heating cables.

The switchboard may be automated and may deactivate or reduce heating power in a section when heating of the other, or another, section is activated or when heating power in that other section is increased. Deactivation or a reduction of heating power in one section is synchronised or coordinated with activation or an increase of heating power in another section. In this way, the aggregate power consumption is always substantially lower than if both of those sections were activated to the same or a similar power level simultaneously, as in the prior art.

The pipeline may comprise at least one layer of thermal insulation around the trace heating cables. The pipeline may have a pipe-in-pipe configuration, with the trace heating cables being disposed inside the annulus. The annulus may also contain at least one layer of thermal insulation material and/or a low-pressure gas.

In summary, the invention provides an electric heating system for a subsea pipeline, which system comprises heating sections disposed in neighbouring longitudinal succession along the pipeline. A switchboard is configured to supply power in a cycle alternating between the sections. Levels of heating power supplied to the sections are in mutually-opposed alternation throughout that cycle.

During the cycle, a greater level of heating power is supplied to a first section than to a second section for a period of time. Conversely, a greater level of heating power is supplied to the second section than to the first section in preceding and succeeding periods. For example, the second section may be deactivated during a period and the first section may be deactivated outside that period.

By applying heat to successive portions of the pipeline in this intermittent or fluctuating manner, the overall power requirement of the system is greatly reduced without impacting on flow assurance. There is a corresponding reduction in the size, complexity and cost of power generation and transmission hardware.

In order that the invention may be more readily understood, reference will now be made, by way of example, to the accompanying drawings in which:
Figure 1 is a schematic side view of an electrically heated subsea flowline of the invention, including a power distribution switchboard located topside on a surface installation;
Figure 2 corresponds to Figure 1 but shows a variant in which the power distribution switchboard is located instead on the seabed beside the flowline;
Figures 3a, 3b and 3c are detail views of the arrangement shown in Figure 1, showing power being switched in alternation between heating sections on longitudinally-successive portions of the flowline;
Figures 4a and 4b are graphs showing relative heating power levels applied to adjoining portions of a pipeline in successive time periods, with the power applied to each portion being cyclically activated and deactivated in mutual alternation;
Figures 5a and 5b correspond to Figures 4a and 4b but show the heating power applied to each portion instead being cyclically increased and reduced in mutual alternation;
Figure 6 is a graph of temperature against time showing typical heating cycles for two portions of heated flowline of the invention in maintenance mode;
Figure 7 is a graph of arrival temperature against time showing typical heating cycles for a heated flowline of the invention in continuous heating mode, for three different flowrates; and
Figures 8a and 8b are schematic detail side views showing the operation of a variant of the arrangement shown in Figure 1, in which the flowline has four longitudinally-successive portions with respective heated sections powered in alternation.

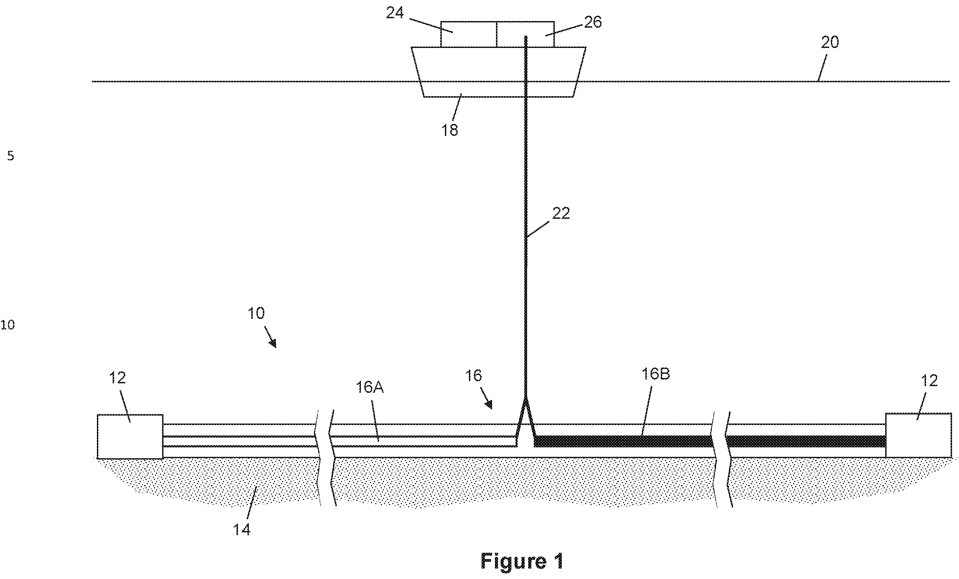

Referring firstly to Figures 1, 2 and 3a to 3c, a heated subsea pipeline 10 extends between terminal modules 12 on the seabed 14. Subsea structures upstream and downstream of the terminal modules 12 have been omitted for clarity.

The pipeline 10 is fitted with an electrical heating system 16, which may be a DEH system, a trace heating system or an inductive system. In this example, the heating system 16 is a trace heating system that is divided into a first section 16A and a second section 16B extending along respective portions of the pipeline 10 in longitudinal succession. By way of example, each section 16A, 16B may be ten kilometres in length, and may input heating power to the pipeline 10 at ten watts per linear metre.

Where the heating system 16 is a trace heating system or an inductive system, heating cables of the system 16 may extend along the thermally-insulating annulus of a PiP pipeline 10 comprising an inner pipe and an outer pipe in coaxial relation. The heating cables could extend longitudinally along the inner pipe or could wind helically around, or undulate along, the inner pipe instead. In a heating system 16 powered by triphasic alternating current, the heating cables may be grouped in triplets terminating in star ends, which may for example be positioned on or adjacent to the terminal modules 12.

The heating system 16 is powered from a topside installation exemplified here by an FPSO 18 floating at the surface 20, connected to the heating system 16 by a power umbilical 22 hanging from the FPSO 18 toward the seabed 14. Conveniently, the power umbilical 22 may connect to the heating system 16 at a central location between the sections 16A, 16B as shown.

In practice, the FPSO 18 will receive production fluid from the pipeline 10 via a riser system and will be moored to the seabed by multiple mooring lines but a riser system and moorings have been omitted from the drawings for clarity. The umbilical 22 could be supported by or integrated into a riser system, and may have any suitable configuration such as a catenary configuration.

The FPSO 18 has an onboard power unit 24 that generates electrical power at a required voltage and frequency. A switchboard 26 is interposed between the power unit 24 and the sections 16A, 16B of the heating system 16 to control the distribution of that power between the sections 16A, 16B, and to control the level and timing of the power that is supplied to each section 16A, 16B.

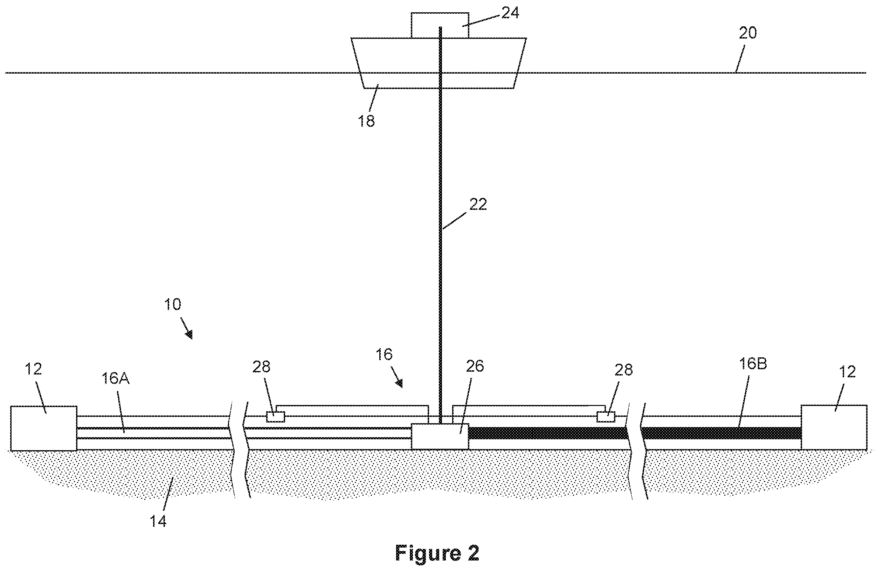

In Figure 1, the switchboard 26 is situated onboard the FPSO 18 above the surface 20 whereas the variant of Figure 2 shows the switchboard 26 situated subsea, in particular on the seabed 14 beside the pipeline 10.

The variant of Figure 2 also shows the option of temperature sensors 28 on the portions of the pipeline 10 that are heated by the respective sections 16A, 16B of the heating system 16. The temperature sensors 28 feed signals to the switchboard 26 representing the temperature of the production fluid in their portions of the pipeline 10. The switchboard 26 responds to those signals by adjusting power levels, or time periods at given power levels, in the associated sections 16A, 16B of the heating system 16. The objective is to attain, or to maintain, a target temperature in the production fluid. As noted previously, the target temperature may vary depending upon whether the system is in a maintenance mode, a heat-up mode or a continuous heating mode.

The temperature sensors 28 of Figure 2 could also be used in the arrangement shown in Figure 1, feeding signals back up the umbilical 22 to the switchboard 26 onboard the FPSO 18. The switchboard 26 will then respond by adjusting the power transmitted back down the umbilical 22 to the sections 16A, 16B of the heating system 16.

In accordance with the invention, the switchboard 26 is configured or controlled to activate and deactivate the adjoining sections 16A, 16B of the heating system 16 in alternation. This alternation is represented schematically in the drawings by showing the activated section 16A or 16B as black and the deactivated section 16A or 16B as white.

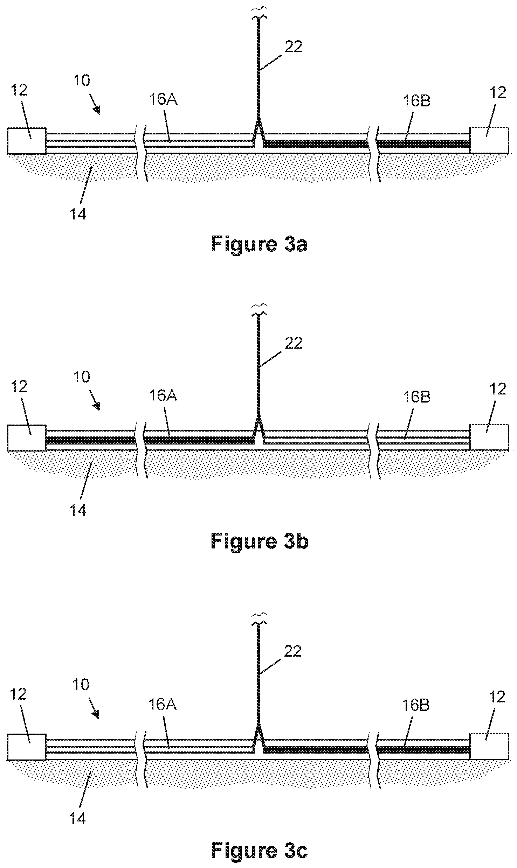

Figures 3a to 3c correspond to a detail of Figure 1, omitting the FPSO 18 with its onboard power unit 24 and switchboard 26, and the temperature sensors 28 of Figure 2. They show the alternating activation of the invention as a sequence. Specifically, in Figure 3a, section 16B is activated while section 16A is deactivated. In Figure 3b, section 16B is deactivated while section 16A is activated. In Figure 3c, the system returns to its previous state in which section 16B is activated and section 16A is deactivated. This alternating cycle continues throughout operation of the pipeline 10 as it conveys production fluid between the terminal modules 12.

The cyclical period of each activation and deactivation of a section 16A, 16B can be predetermined by inferring that, for a pipeline 10 with known thermal characteristics such as U-value and a production fluid at a theoretically known temperature at the wellhead, a given power input over that period will result in in the production fluid being maintained within a given temperature range. Alternatively, where temperature sensors are provided as in Figure 2, the switchboard 26 can respond to feedback by adjusting the power levels and/or the time periods at particular power levels to maintain the production fluid within a desired temperature range. As another option, temperature of the production fluid can be measured only onboard the FPSO 18 and the temperature of the production fluid inside the pipeline 10 can be inferred from that value.

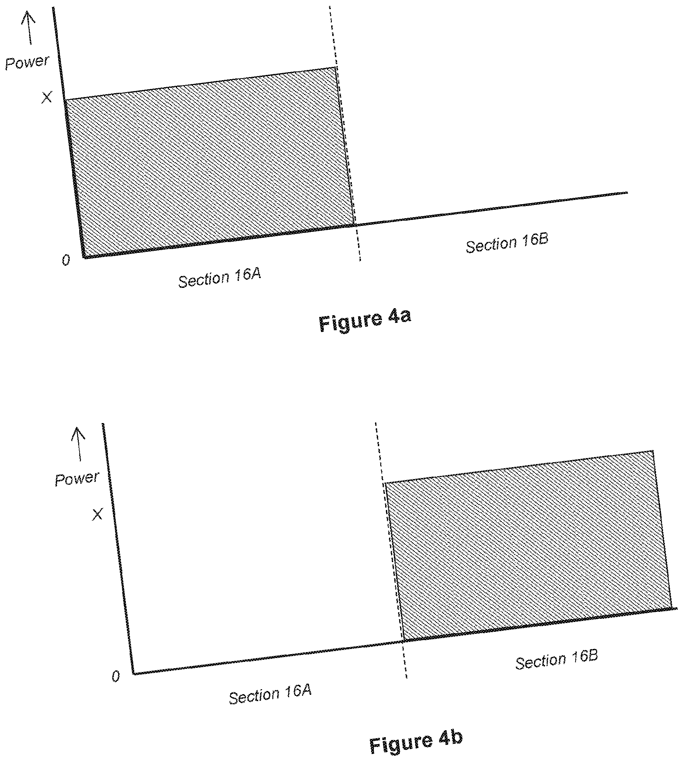

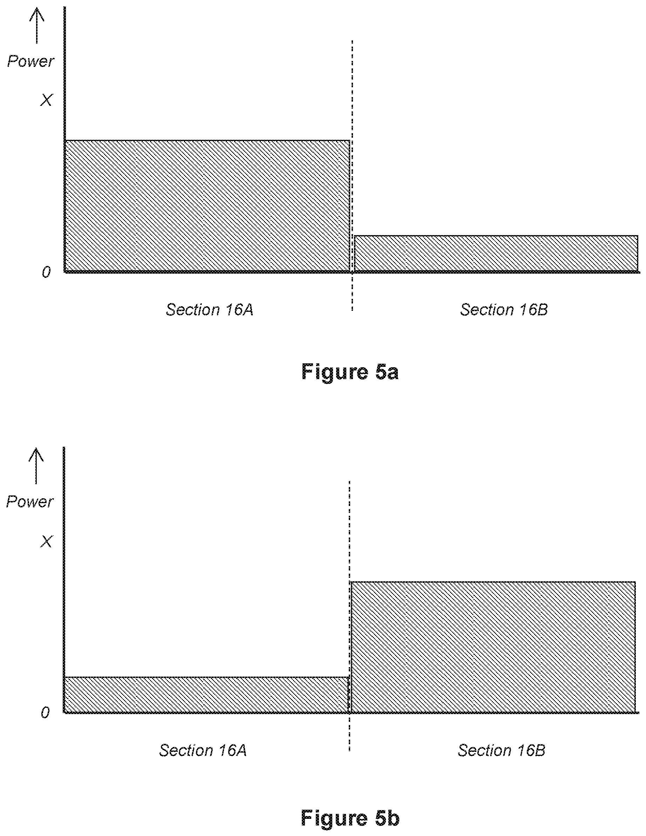

Turning now to Figures 4a, 4b, 5a and 5b, these graphs show heating power input to each section 16A, 16B in successive time periods of an alternating cycle. Figures 4a and 4b show a scenario in which power in each section 16A, 16B is activated and deactivated in turn, maintaining a substantially constant overall power requirement marked as X on the vertical axis. The power requirement X will be considerably lower, in principle half of, the aggregate power requirement if both sections 16A, 16B were instead activated simultaneously to similar power levels as in the prior art.

Figures 5a and 5b show a scenario in which power in each section 16A, 16B is increased and reduced in turn. Thus, neither section 16A, 16B is ever completely deactivated, but their levels of activation expressed in terms of power input fluctuate in dependence on, and in opposed relation to, each other. The aggregate power input to the sections 16A, 16B at any one time remains X as marked on the vertical axis, hence maintaining the same substantially constant overall power requirement at a level considerably below that of the prior art.

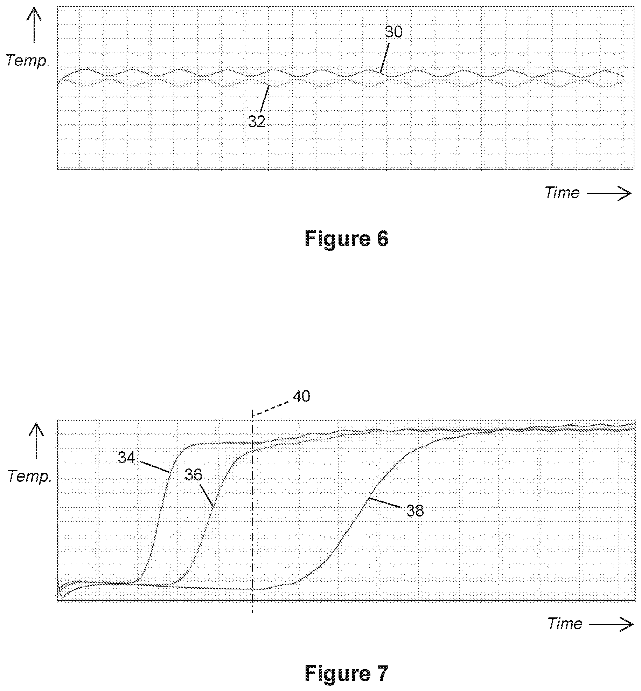

Figures 6 and 7 model the effect of power fluctuation of the invention on the temperature of production fluid flowing along the pipeline 10. Here, time is expressed on the horizontal axis, with transitions of heating power between sections 16A and 16B every hour. Temperature is expressed on the vertical axis in units of degrees Celsius.

In Figure 6, which shows the system in a maintenance mode, line 30 shows the average temperature of the production fluid in an upstream section 16A of the pipeline 10 and line 32 shows the average temperature of the production fluid in a downstream section 16B of the pipeline 10. Time is expressed here in units of one hour. It will be noted that the temperature of the production fluid in each section 16A, 16B fluctuates sinuously over time, with a period of one hour between peaks and troughs as heating is activated and deactivated, while remaining within a narrow range of less than one degree Celsius.

Line 32 reflects a slightly lower average temperature than line 30 due to heat loss to the environment as the production fluid flows along the pipeline 10, assuming the same level of heating power input to the respective sections 16A, 16B. In practice, heating of section 16B could be increased relative to heating of section 16A to compensate for this.

Figure 7, which shows the system in continuous heating mode, is a graph of arrival temperature of the production fluid after transiting the pipeline 10 against time in five-hour units following start-up of flow following a shut-down period. The lines 34, 36, 38 reflect three different flowrates of the production fluid, from a slower flowrate combined with lower power input in line 34 to a higher flowrate in line 38. For a given level of heating power input, shown in line 36 and line 38, the threshold temperature is therefore attained more quickly in line 36 than in line 38.

After allowing a period of twenty-four hours from start-up, represented by the dashed vertical line 40 in Figure 7, the system of the invention is switched on to alternate heating between successive sections 16A, 16B of the pipeline 10. Minor fluctuations in the arrival temperature ensue as the system cycles between its modes of activation but once the temperature reaches a threshold range, the fluctuations remain within that narrow range.

The invention exploits the thermal inertia of the production fluid and of the pipeline 10 itself to smooth fluctuations in the temperature of the production fluid and to avoid cold spots at which waxes or hydrates are likely to appear. The smoothing effect is enhanced by conduction and convection of heat within the production fluid, by conduction of heat within the wall of the pipeline 10, and by transport of heat along the pipeline 10 by virtue of the flow of the hot production fluid.

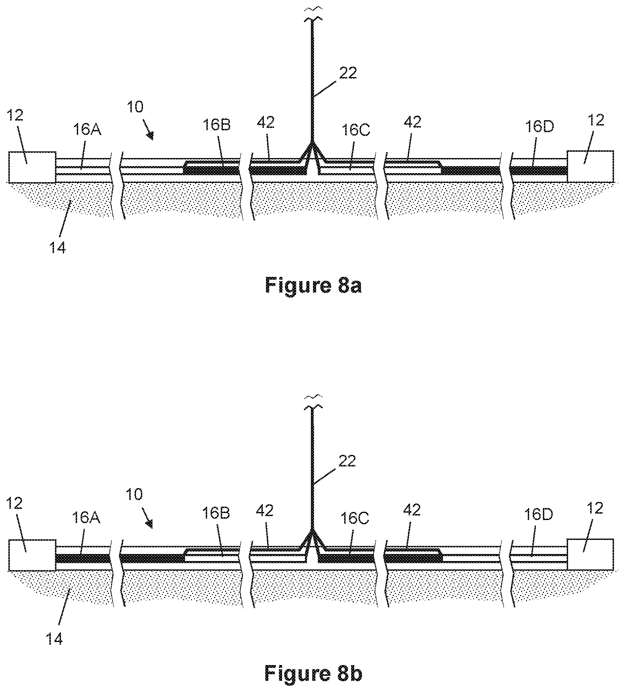

Turning finally to Figures 8a and 8b, these drawings show a further embodiment of the invention in which like numerals are used for like features. Again, this is a variant of the arrangement shown in Figure 1 and, like Figures 3a to 3c, omits the FPSO 18 with its onboard power unit 24 and switchboard 26, and the temperature sensors 28 of Figure 2.

In this example, the heating system 16 is divided into four sections 16A, 16B, 16C and 16D disposed in longitudinal succession along the pipeline 10. Each of those sections 16A-D is powered independently by the power unit 24 under the control of the switchboard 26 aboard the FPSO 18. Branched power lines 42 extend along the pipeline 10 from the umbilical 22 to the outboard first and fourth sections 16A and 16D adjoining the terminal modules 12.

In Figure 8a, the second and fourth sections 16B and 16D are activated together while the first and third sections 16A and 16C are deactivated. The situation reverses in Figure 8b, where the first and third sections 16A and 16C are both now activated while the second and fourth sections 16B and 16D are deactivated. The cycle continues while production fluid continues to flow along the pipeline 10 and may be adjusted to maintain temperature during a shutdown or to remediate flow in the event of a blockage.

Again, complete deactivation of a section 16A-D as shown is optional. Heating power may instead be reduced and increased cyclically rather than being completely removed from a section 16A-D when being switched through on-off-on-off cycles.

Many other variations are possible within the inventive concept. For example, the relative locations of the power supply umbilical 22, the FSPO 18 and the pipeline 10 can be modified without departing from the invention. For example, the umbilical 22 can at least partially follow the pipeline 10, freely or connected in a 'piggy-back' arrangement. Further sections can similarly be connected together and more umbilicals may be used to supply power to one or more switchboards 26.

## Claims

1. A method of operating an electric heating system (16) having at least first and second sections (16A, 16B) disposed in neighbouring longitudinal succession along a subsea pipeline (10), the method comprising, in a repeating cycle:
for a first period of time, supplying greater heating power to the first section (16A) than to the second section (16B); and then
decreasing the level of heating power supplied to the first section (16A) while increasing the level of heating power supplied to the second section (16B) in a transition after the first period of time; and then,
for a second period of time, supplying greater heating power to the second section (16B) than to the first section (16A); and then
decreasing the level of heating power supplied to the second section (16B) while increasing the level of heating power supplied to the first section (16A) in a transition after the second period of time,
so that the levels of heating power supplied to the first and second sections (16A, 16B) are in mutually-opposed alternation throughout the cycle.

2. The method of Claim 1, comprising deactivating the second section (16B) for the first period and deactivating the first section (16A) for the second period.

3. The method of Claim 1, comprising continuing to supply heating power to the second section (16B) for the first period and to the first section (16A) for the second period.

4. The method of any preceding claim, comprising adjusting timing of the cycle in response to measuring temperature of fluid within or flowing from the pipeline (10).

5. The method of any preceding claim, comprising adjusting levels of heating power supplied to the first and second sections (16A, 16B) in response to measuring temperature of fluid within or flowing from the pipeline (10).

6. The method of any preceding claim, comprising varying levels of heating power supplied to the first and second sections (16A, 16B) throughout the cycle.

7. The method of any of Claims 1 to 5, comprising keeping a level of heating power supplied to the first section (16A) substantially constant throughout the first period.

8. The method of any of Claims 1 to 5, comprising keeping a level of heating power supplied to the second section (16B) substantially constant throughout the second period.

9. The method of any preceding claim, comprising supplying a greater maximum level of heating power to the first section (16A) than to the second section (16B).

10. The method of any preceding claim, comprising maintaining aggregate power supplied to the system (16) at a substantially constant level throughout the cycle.

11. The method of any preceding claim, comprising powering the first and second sections (16A, 16B) via an automated subsea switchboard (26).

12. An electric heating system (16) for a subsea pipeline, the system comprising:
at least first and second heating sections (16A, 16B) that are disposed in neighbouring longitudinal succession along the pipeline (10);
a switchboard (26); and
a controller that is configured to control the switchboard (26) to supply power to the first and second sections (16A, 16B) in a repeating cycle in which: a greater level of heating power is supplied to the first section (16A) than to the second section (16B) for a first period of time; and then the level of heating power supplied to the first section (16A) is decreased while the level of heating power supplied to the second section (16B) is increased in a transition after the first period of time; and then a greater level of heating power is supplied to the second section (16B) than to the first section (16A) for a second period of time; and then the level of heating power supplied to the second section (16B) is decreased while the level of heating power supplied to the first section (16A) is increased in a transition after the second period of time, so that the levels of heating power supplied to the first and second sections (16A, 16B) are in mutually-opposed alternation throughout the cycle.

13. The system of Claim 12, wherein the switchboard (26) is on a surface installation (18).

14. The system of Claim 12, wherein the switchboard (26) is at a subsea location.

15. The system of any of Claims 12 to 14, wherein the switchboard (26) is configured to operate the cycle autonomously.

16. A subsea pipeline (10) fitted with at least one heating system (16) of any of Claims 12 to 15.

17. The pipeline (10) of Claim 16, further comprising at least one temperature sensor (28) mounted on or downstream of the pipeline (10) and connected to the switchboard (26) to send production fluid temperature feedback to the switchboard (26).

18. The pipeline of Claim 17, wherein the switchboard (26) is configured to respond to said feedback by adjusting timing of the cycle.

19. The pipeline of Claim 17 or Claim 18, wherein the switchboard (26) is configured to respond to said feedback by adjusting levels of heating power supplied to the first and second sections (16A, 16B).

20. An offshore hydrocarbon production installation comprising at least one pipeline (10) of any of Claims 17 to 19.

21. The installation of Claim 20, wherein the heating system (16) is powered via an umbilical that extends from a power unit (24) at the surface and connects to the heating system (16) between the first and second sections (16A, 16B).

## Patentansprüche

1. Verfahren zum Betreiben eines elektrischen Heizsystems (16) mit mindestens ersten und zweiten Abschnitten (16A, 16B), die in benachbarter Längsfolge entlang einer Unterwasser-Pipeline (10) angeordnet sind, wobei das Verfahren in einem sich wiederholenden Zyklus Folgendes umfasst:
für einen ersten Zeitraum, Zuführen einer größeren Heizleistung zu dem ersten Abschnitt (16A) als zu dem zweiten Abschnitt (16B); und danach
Absenken des Pegels der dem ersten Abschnitt (16A) zugeführten Heizleistung bei gleichzeitigem Anheben des Pegels der dem zweiten Abschnitt (16B) zugeführten Heizleistung in einem Übergang nach dem ersten Zeitraum; und danach,
für einen zweiten Zeitraum, Zuführen einer größeren Heizleistung zu dem zweiten Abschnitt (16B) als zu dem ersten Abschnitt (16A); und danach
Absenken des Pegels der dem zweiten Abschnitt (16B) zugeführten Heizleistung bei gleichzeitigem Anheben des Pegels der dem ersten Abschnitt (16A) zugeführten Heizleistung in einem Übergang nach dem zweiten Zeitraum,
sodass die Pegel der dem ersten und dem zweiten Abschnitt (16A, 16B) zugeführten Heizleistung über den gesamten Zyklus hinweg in zueinander entgegengesetztem Wechsel vorliegen.

2. Verfahren nach Anspruch 1, umfassend das Deaktivieren des zweiten Abschnitts (16B) für den ersten Zeitraum und das Deaktivieren des ersten Abschnitts (16A) für den zweiten Zeitraum.

3. Verfahren nach Anspruch 1, umfassend das Fortführen der Zufuhr von Heizleistung zu dem zweiten Abschnitt (16B) für den ersten Zeitraum und zu dem ersten Abschnitt (16A) für den zweiten Zeitraum.

4. Verfahren nach einem der vorstehenden Ansprüche, umfassend das Anpassen des Timings des Zyklus als Reaktion auf ein Messen der Temperatur von Fluid innerhalb der oder aus der Pipeline (10) strömendem Fluid.

5. Verfahren nach einem der vorstehenden Ansprüche, umfassend das Anpassen von Pegeln der dem ersten und dem zweiten Abschnitt (16A, 16B) zugeführten Heizleistung als Reaktion auf ein Messen der Temperatur von Fluid innerhalb der oder aus der Pipeline (10) strömendem Fluid.

6. Verfahren nach einem der vorstehenden Ansprüche, umfassend das Variieren von Pegeln der dem ersten und dem zweiten Abschnitt (16A, 16B) zugeführten Heizleistung über den gesamten Zyklus hinweg.

7. Verfahren nach einem der Ansprüche 1 bis 5, umfassend das Im-Wesentlichen-Konstant-Halten eines Pegels der dem ersten Abschnitt (16A) zugeführten Heizleistung über den gesamten ersten Zeitraum hinweg.

8. Verfahren nach einem der Ansprüche 1 bis 5, umfassend das Im-Wesentlichen-Konstant-Halten eines Pegels der dem zweiten Abschnitt (16B) zugeführten Heizleistung über den gesamten zweiten Zeitraum hinweg.

9. Verfahren nach einem der vorstehenden Ansprüche, umfassend das Zuführen eines größeren maximalen Pegels an Heizleistung zu dem ersten Abschnitt (16A) als zu dem zweiten Abschnitt (16B).

10. Verfahren nach einem der vorstehenden Ansprüche, umfassend das Halten der dem System (16) zugeführten Gesamtleistung auf einem im Wesentlichen konstanten Pegel über den gesamten Zyklus hinweg.

11. Verfahren nach einem der vorstehenden Ansprüche, umfassend das Versorgen des ersten und des zweiten Abschnitts (16A, 16B) mit Energie über eine automatisierte Unterwasserschaltanlage (26).

12. Elektrisches Heizsystem (16) für eine Unterwasser-Pipeline, das System umfassend:
mindestens erste und zweite Heizabschnitte (16A, 16B), die in benachbarter Längsfolge entlang der Pipeline (10) angeordnet sind;
eine Schaltanlage (26); und
eine Steuerung, die konfiguriert ist, um die Schaltanlage (26) zu steuern, um den ersten und den zweiten Abschnitt (16A, 16B) in einem sich wiederholenden Zyklus mit Energie zu versorgen, in welchem: dem ersten Abschnitt (16A) für einen ersten Zeitraum eine größere Heizleistung zugeführt wird als dem zweiten Abschnitt (16B); und danach der dem ersten Abschnitt (16A) zugeführte Pegel an Heizleistung verringert wird, während der dem zweiten Abschnitt (16B) zugeführte Pegel an Heizleistung in einem Übergang nach dem ersten Zeitraum erhöht wird; und danach dem zweiten Abschnitt (16B) für einen zweiten Zeitraum eine größere Heizleistung zugeführt wird als dem ersten Abschnitt (16A); und danach der dem zweiten Abschnitt (16B) zugeführte Pegel an Heizleistung verringert wird, während der dem ersten Abschnitt (16A) zugeführte Pegel an Heizleistung in einem Übergang nach dem zweiten Zeitraum erhöht wird, sodass die Pegel der dem ersten und dem zweiten Abschnitt (16A, 16B) zugeführten Heizleistung über den gesamten Zyklus hinweg in zueinander entgegengesetztem Wechsel vorliegen.

13. System nach Anspruch 12, wobei sich die Schaltanlage (26) auf einer Oberflächeninstallation (18) befindet.

14. System nach Anspruch 12, wobei sich die Schaltanlage (26) an einem Unterwasserstandort befindet.

15. System nach einem der Ansprüche 12 bis 14, wobei die Schaltanlage (26) konfiguriert ist, um den Zyklus autonom zu betreiben.

16. Unterwasser-Pipeline (10), die mit mindestens einem Heizsystem (16) nach einem der Ansprüche 12 bis 15 ausgestattet ist.

17. Pipeline (10) nach Anspruch 16, ferner umfassend mindestens einen Temperatursensor (28), der an oder stromabwärts der Pipeline (10) angebracht und mit der Schaltanlage (26) verbunden ist, um Rückmeldungen zur Temperatur des Produktionsfluids an die Schaltanlage (26) zu senden.

18. Pipeline nach Anspruch 17, wobei die Schaltanlage (26) konfiguriert ist, um auf die Rückmeldung durch Anpassen des Timings des Zyklus zu reagieren.

19. Pipeline nach Anspruch 17 oder 18, wobei die Schaltanlage (26) konfiguriert ist, um auf die Rückmeldung durch Anpassen von Pegeln der dem ersten und dem zweiten Abschnitt (16A, 16B) zugeführten Heizleistung zu reagieren.

20. Offshore-Kohlenwasserstoff-Förderinstallation, umfassend mindestens eine Pipeline (10) nach einem der Ansprüche 17 bis 19.

21. Installation nach Anspruch 20, wobei das Heizsystem (16) über ein Versorgungskabel mit Leistung versorgt wird, das sich von einer Leistungseinheit (24) an der Oberfläche erstreckt und zwischen dem ersten und dem zweiten Abschnitt (16A, 16B) mit dem Heizsystem (16) verbunden ist.

## Revendications

1. Procédé de fonctionnement d'un système de chauffage électrique (16) ayant au moins des première et seconde sections (16A, 16B) disposées en succession longitudinale voisine le long d'un pipeline sous-marin (10), le procédé comprenant, selon un cycle répétitif :
pendant une première période de temps, la fourniture d'une puissance de chauffage supérieure à la première section (16A) qu'à la seconde section (16B) ; et puis
la diminution du niveau de puissance de chauffage fourni à la première section (16A) tout en augmentant le niveau de puissance de chauffage fourni à la seconde section (16B) lors d'une transition après la première période de temps ; et puis,
pendant une seconde période de temps, la fourniture d'une puissance de chauffage supérieure à la seconde section (16B) qu'à la première section (16A) ; et puis
la diminution du niveau de puissance de chauffage fourni à la seconde section (16B) tout en augmentant le niveau de puissance de chauffage fourni à la première section (16A) lors d'une transition après la seconde période de temps,
de sorte que les niveaux de puissance de chauffage fournis aux première et seconde sections (16A, 16B) soient en alternance mutuellement opposée tout au long du cycle.

2. Procédé selon la revendication 1, comprenant la désactivation de la seconde section (16B) pendant la première période et la désactivation de la première section (16A) pendant la seconde période.

3. Procédé selon la revendication 1, comprenant la poursuite de la fourniture de puissance de chauffage à la seconde section (16B) pendant la première période et à la première section (16A) pendant la seconde période.

4. Procédé selon l'une quelconque des revendications précédentes, comprenant l'ajustement de la temporisation du cycle en réponse à la mesure de la température du fluide à l'intérieur ou s'écoulant du pipeline (10).

5. Procédé selon l'une quelconque des revendications précédentes, comprenant l'ajustement des niveaux de puissance de chauffage fournis aux première et seconde sections (16A, 16B) en réponse à la mesure de la température du fluide à l'intérieur ou s'écoulant du pipeline (10).

6. Procédé selon l'une quelconque des revendications précédentes, comprenant des niveaux variables de puissance de chauffage fournie aux première et seconde sections (16A, 16B) tout au long du cycle.

7. Procédé selon l'une quelconque des revendications 1 à 5, comprenant le maintien d'un niveau de puissance de chauffage fourni à la première section (16A) sensiblement constant pendant toute la première période.

8. Procédé selon l'une quelconque des revendications 1 à 5, comprenant le maintien d'un niveau de puissance de chauffage fourni à la seconde section (16B) sensiblement constant tout au long de la seconde période.

9. Procédé selon l'une quelconque des revendications précédentes, comprenant la fourniture d'un niveau maximal de puissance de chauffage plus élevé à la première section (16A) qu'à la seconde section (16B).

10. Procédé selon l'une quelconque des revendications précédentes, comprenant le maintien de la puissance globale fournie au système (16) à un niveau sensiblement constant tout au long du cycle.

11. Procédé selon l'une quelconque des revendications précédentes, comprenant l'alimentation des première et seconde sections (16A, 16B) par l'intermédiaire d'un tableau de distribution sous-marin automatisé (26).

12. Système de chauffage électrique (16) pour un pipeline sous-marin, le système comprenant :
au moins des première et seconde sections de chauffage (16A, 16B) qui sont disposées en succession longitudinale adjacente le long du pipeline (10) ;
un tableau de distribution (26) ; et
un dispositif de commande qui est configuré pour commander le tableau de distribution (26) pour alimenter en énergie les première et seconde sections (16A, 16B) selon un cycle répétitif dans lequel : un niveau de puissance de chauffage plus élevé est fourni à la première section (16A) qu'à la seconde section (16B) pendant une première période de temps ; et ensuite le niveau de puissance de chauffage fourni à la première section (16A) est diminué tandis que le niveau de puissance de chauffage fourni à la seconde section (16B) est augmenté lors d'une transition après la première période de temps ; et ensuite un niveau de puissance de chauffage plus élevé est fourni à la seconde section (16B) qu'à la première section (16A) pendant une seconde période de temps ; puis le niveau de puissance de chauffage fourni à la seconde section (16B) est diminué tandis que le niveau de puissance de chauffage fourni à la première section (16A) est augmenté lors d'une transition après la seconde période de temps, de sorte que les niveaux depuissance de chauffage fournis aux première et seconde sections (16A, 16B) soient en alternance mutuellement opposée tout au long du cycle.

13. Système selon la revendication 12, dans lequel le tableau de distribution (26) est sur une installation de surface (18).

14. Système selon la revendication 12, dans lequel le tableau de distribution (26) est situé à un emplacement sous-marin.

15. Système selon l'une quelconque des revendications 12 à 14, dans lequel le tableau de distribution (26) est configuré pour exécuter le cycle de manière autonome.

16. Pipeline sous-marin (10) équipé d'au moins un système de chauffage (16) selon l'une quelconque des revendications 12 à 15.

17. Pipeline (10) selon la revendication 16, comprenant en outre au moins un capteur de température (28) monté sur ou en aval du pipeline (10) et connecté au tableau de distribution (26) pour envoyer un retour de température du fluide de production au tableau de distribution (26).

18. Pipeline selon la revendication 17, dans lequel le tableau de distribution (26) est configuré pour répondre audit retour en ajustant la temporisation du cycle.

19. Pipeline selon la revendication 17 ou la revendication 18, dans lequel le tableau de distribution (26) est configuré pour répondre audit retour en ajustant les niveaux de puissance de chauffage fournis aux première et seconde sections (16A, 16B).

20. Installation de production d'hydrocarbures en mer-comprenant au moins un pipeline (10) selon l'une quelconque des revendications 17 à 19.

21. Installation selon la revendication 20, dans laquelle le système de chauffage (16) est alimenté par l'intermédiaire d'un ombilical qui s'étend depuis une unité d'alimentation (24) à la surface et se connecte au système de chauffage (16) entre les première et seconde sections (16A, 16B).
